# NEW EUROPEAN PATENT SPECIFICATION

(11) **EP 0 283 654 B2**
(45) Date of publication and mention of the opposition decision: **26.04.2006**
(45) Mention of the grant of the patent: 29.09.1993
(21) Application number: 88100856.9
(22) Date of filing: 21.01.1988
(51) Int. Cl.: C08L 69/00, C08L 67/00, C08K 5/11

(54) **Polymer mixture comprising an aromatic polycarbonate and an aromatic polyester**
Harzmischung aus einem aromatischen Polycarbonat und einem aromatischen Polyester
Mélange polymère comprenant un polycarbonate aromatique et un polyester aromatique

(30) Priority: 23.03.1987 NL 8700669
(43) Date of publication of application: 28.09.1988
(73) Proprietor: GENERAL ELECTRIC COMPANY, Schenectady, N.Y. 12151 (US)
(72) Inventor: Hamersma, Wilhelmus Jozefus Ludovicus, NL-4600 AC Bergen op Zoom (NL); de Boer, Jan, NL-4600 AC Bergen op Zoom (NL); Roovers, Wilhelmus Marinus Maria, NL-4600 AC Bergen op Zoom (NL); Verhoeven, Jeroen Johannes, NL-4600 AC Bergen op Zoom (NL)
(74) Representative: Grever, Frederik

(56) References cited:
- EP-A- 247 465
- EP-A- 256 461
- EP-A- 0 066 997
- EP-A- 0 226 189
- EP-A1- 0 066 991
- EP-A2- 0 166 187
- DE-A- 2 729 485
- DE-A1- 2 704 679
- DE-A1- 2 772 948
- FR-A- 2 356 698
- NL-A- 123 351
- US-A- 3 953 539
- US-A- 4 521 562
- US-A1- 3 516 957

## Description

The invention relates to the use of esters for the suppression of transesterification in polymer mixtures comprising aromatic polycarbonates and aromatic polyesters.

Mixtures comprising aromatic polycarbonates and aromatic polycarbonates are known.

It is also known, for example, from GB-A-1468154, that such mixtures show a certain instability. A transesterification probably occurs in such mixtures.

It is suggested in GB-A-1488154 to suppress the said transesterification by the addition of a phosphorus-containing compound, for example, triphenyl phosphite, phosphorous acid.

The invention is based on the discovery that another group of compounds, namely the esters of one or more trifunctional to hexafunctional alcohols and one or more saturated aliphatic C₅-C₃₄ mono- or dicarboxylic acids, are also suitable to suppress the transesterification.

The invention is directed to the use of 0.1-5% by weight of one or more esters of one or more trifunctional to hexafunctional alcohols and one or more saturated aliphatic C₅-C₃₄ mono- or dicarboxylic acids (C) to suppress transesterification in a polymer mixture which comprises the following constituents:
A. 1-98.9% by weight of aromatic polycarbonate,
B. 98.9-1% by weight of aromatic polyester, consisting of a polyalkylene terephthalate derived from a glycol with 2-10 carbon atoms and terephtalic acid, in which not more than 30 mol% of the glycol and/or terephthalic acid is replaced by other comonomers.
D. 0-25% by weight of one or more agents to improve the impact strength, and
E. 0-50% by weight of conventional additives, in which the sum of the constituents A, B, C, D and E is 100% by weight, with the exception of polymer mixtures comprising glass fibers, and not comprising a low molecular weight compound with up to 70 C-atoms and with (-SO₃)-ₘQ groups, in which Q represents hydrogen, NH4 +, an alkali or earth alkaline metal and m is a whole number which is equal to the value of the valence of Q, and not comprising a polymeric substance with sulphonic acid groups. Polymer mixture comprising an aromatic polycarbonate, a polybutylene tereftalate, a considerable amount of glass fibres and the stearic acid ester of pentaerythritol as a mold release agent has been on the market. The suppression of the transesterification is however of importance only in such polymer mixtures which do not comprise reinforcing fillers such as glass fibres.

The effects of transesterification cannot be determined in glass filled blends. Moreover the overall property profile of a glass filled product is determined to a great extent by the presence of the glass fibres. It will hardly make any difference in glass filled compositions whether transesterification occurs or does not occur.

It is preferred to use 0.1-2% by weight of constituent C. The tetra stearate> or pentaerythritol is preferably used as constituent of C.

The polymer mixture according to the invention may comprise as constituent E at least one convention-ally used agent to improve the stability of polycarbonate-polyester polymer mixtures, for example, a phosphite or phosphorous acid, optionally in combination with further conventional additives.

Thus the polymer mixture according to the invention comprises at any rate the following constituents, in the quantities indicated hereinbefore:
A. aromatic polycarbonate,
B. aromatic polyester,
C. ester of one or more trifunctional to hexafunctional alcohols and one or more saturated aliphatic Cs-C₃₄ mono- or dicarboxylic acids.
   The polymer mixture may moreover comprise one or more of the following constituents:
D. 0-25% by weight of one more agents to improve the impact strength, and
E. 0-50% by weight of conventional additives.

### A. Aromatic polycarbonate

Aromatic polycarbonates are materials known per se. They are generally prepared by reacting a so dihydric phenol compound with a carbonate precursor, for example, phosgene, a halogen formiate or a carbonate ester. Aromatic polycarbonates are polymers which comprise units of the formula 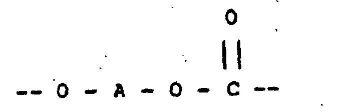 wherein A is a bivalent aromatic radical derived from the dihydric phenol used in the preparation of the polymer. Mononuclear or polynuclear aromatic compounds which comprise two hydroxy radicals which are each directly bonded to a carbon atom of an aromatic nucleus may be used in the preparation of the aromatic polycarbonates as dihydric phenols.

Examples of suitable dihydric phenols are: 2,2-bis-(4-hydroxyphonyl)propane; hydroquinone; resorcinol; 2,2-bis-(4-hydroxyphonyl)pentane 2,4'-(dihydroxydiphenyl)methane; bis-(2-hydroxyphenyl)methane; bis-(4-hydroxyphenyl)methane; bis-(4-hydroxy-5-nitrophenyl) methane; 1,1-bis(4-hydroxyphenyl)ethane; 3,3-bis (4-hydroxyphenyl)pentane; 2,2-dihydroxyphenyl; 2,6-dihydroxynaphthalene; bis-(4-hydroxydiphenyl)sulphone; bis-(3,5-diethyl-4-hydroxyphenyl)sulphone; 2,2-bis-(3,5-dimethyl-4-hydroxyphonyl)propane; 2,4'-dihydroxyphenyl sulphone; 5'-chloro-2,4'-dihydroxydiphenyl sulphone; bis-(4-hydroxyphenyl)diphenyl sulphone; 4,4'-dihydroxydiphenyl ether; 4,4'-d'hydroxy-3,3'-dichlorodiphenyl ether.

Other likewise suitable dihydric phenols are described in US-A- 2,999,835; 3,038,365; 3,334,154 and 4,131,575.

The aromatic polycarbonates may be prepared according to methods known per se: for example, by reacting a dihydric phenol with a carbonate precursor, for example, phosgene. For this purpose reference may be made to the United States Patent Specifications mentioned hereinbefore and to US-A-4,018,750 and 4,123,426. They may also be prepared by a transesterification as described in US-A-3,153,008.

The branched polycarbonates known per se, for example, as described in US-A-4,001,184, are also suitable.

Suitable aromatic polycarbonates are also the so-called polyester carbonates which are obtained by carrying out the polymerisation reaction in the presence of an ester precursor, for example, a difunctional carboxylic acid, for example, terephthalic acid or an ester-forming derivative thereof. These polyester carbonates have ester- and carbonate compounds in the polymeric chain. Polyester carbonates are described, for example, in US-A-3,169,121.

It is also possible in the polymer mixtures according to the invention to use a mixture of different polycarbonates as mentioned hereinbefore as the aromatic polycarbonate.

### B. Aromatic polyester

Polyalkylene terephthalates are used in the polymer mixture according to the invention.

Polyalkylene terephthalates are compounds known per se. They may be prepared, for example, by alcoholysis of esters of terephthalic acid with a glycol succeeded by a polymerisation reaction or by heating glycol compounds with free acids or derivatives thereof. The glycol part of the polyalkylene terephthalates comprises 2-10 carbon atoms; it preferably comprises 2-4 carbon atoms in the form of linear alkylene chains.

Polyesters derived from ethylene glycol or butane-1,4-diol and terephthalic acid are preferably used. It is also possible to use copolyesters in which a part of the said glycol and/or of the terephthalic acid has been replaced by another glycol and/or aromatic carboxylic acid. Not more than 30 mol.%, preferably not more than 10 mol.%, of the glycol and/or terephthalic acid in such copolyesters is replaced by other comonomers.

It is also possible to use so-called block copolyesters as a polyalkylene terephthalate. These block copolyesters are prepared, for example, by converting a polybutylene terephthalate with reactive terminal groups with a reactive polyester or copolyester in the presence of a transesterification catalyst.

Further it is possible to incorporate a branching agent in the polyalkylene terephthalate, for example, a glycol having three or more hydroxyl groups or a trifunctional or polyfunctional acid.

It is also possible to use a mixture of several polyesters as a polyester.

### C. Esters

According to the invention at least one ester of one or more trifunctional to hexafunctional alcohols and one or more saturated aliphatic C₅-C₃₄ mono- or dicarboxylic acids is used to suppress transesterification of mixtures comprising aromatic polycarbonates and aromatic polyesters. Examples of suitable esters are the reaction products of one or more trifunctional to hexafunctional alcohols, for example, glycerin, trimethylol propane, hexanetriol, erythritol, arabitol, adonitol, mannitol, dulcitol, in particular mesoerythritol, xylitol, sorbitol, pentaerythritol with one or more saturated aliphatic mono- or dicarboxylic acids having 5-34 carbon atoms, for example, capric acid, undecanic acid, lauric acid, tridecanic acid, stearic acid valerianic acid, adipic acid azelaic acid, capronic acid, palmitic acid, glutaric acid. The alcohols may be esterified entirely or partly. Examples of suitable esters are the complete or partial esterification products of pentaerythritol with stearic acid or of stearic acid and neopentylone glycol. Pentaerythrityl tetrastearate is preferably used.

### D. Agents to improve the impact strength

The polymer mixture according to the invention preferably comprises one or more agents to improve the impact strength. Any known agent to improve the impact strength of polymer mixtures which comprise an aromatic polycarbonate and a polyalkylene terephthalate may be used in the polymer mixture according to the invention.

The agent to improve the impact strength is generally used in a quantity from 5-30, preferably 5-15% by weight calculated with respect to the total quantity of aromatic polycarbonate, polyalkylene terephthalate and agent to improve the impact strength.

As an agent to improve the impact strength is preferably used in the polymer mixture according to the invention a core shell polymer prepared in several steps and consisting of a rubber-like core on which one or more shells have been grafted. The rubber-like core may be built up from rubber-like polydienes, for example, polybutadiene. The rubber-like core may comprise comonomers, for example, styrenes, acrylonitrile.
The rubber-like core is preferably built up for more than 50 mol.% of units derived from butadiene. One or more shells are grafted on the rubber-like core. The shell preferably consists for more than 50 mol.% of units derived from C1-6 alkylmethacrylates, for example, methylmethacrylate. The shell may also comprise comonomers, for example, acrylonitrile and styrene.

### E. Conventional additives

The polymer mixture according to the invention may comprise as additives, for example, polyolefins, mould-release agents, agents to improve the flame-retarding properties, stabilisers, for example, thermal stabilisers, pigments, dyes.

More in particular the polymer mixture according to the invention may also comprise a combination of several of the various additives mentioned hereinbefore.

In addition to constituent C, the polymer mixture according to the invention may comprise by way of constituent E a conventional stabiliser to prevent transesterifications, for example, a phosphite or phosphorous acid.

The polymer mixture preferably comprises a weight ratio of the quantity of polycarbonate (A) to aromatic polyester (B) between 9:1 and 1:9, more preferably between 85:15 and 15:85.

The polymer mixture according to the invention may be obtained according to the conventional methods of preparing polymer mixtures, for example, by melt extrusion.

The invention will now be described with reference to the ensuing specific examples:

### Comparative example A, example I

Two polymer mixtures were prepared with a composition as recorded in table I hereinafter. The constituents used were the following:
PBT: polybutylene terephthalate with an intrinsic viscosity of 1.10 dl/g measured in a 60/40 mixture of phenol and 1,1,2,2-tetrachloroethane at 25° C.
PC: polycarbonate derived from bisphenol A and phosgene, with an intrinsic viscosity of 53.0 ml/g, measured in methylene chloride (CH₂Cl₂) at 25°C.
IM: agent to improve the impact strength - a core-shell type graft polymer with a rubber-like core substantially built up from butadiene units on which alkylmethacrylates and some comonomers have been grafted.
TS: a mixture of various stabilisers to improve the thermal and the UV stability.
PETS: the tetrastearate of pentaerythritol.

The indicated constituents were extruded together on a double-blade extruder at a melting temperature of approximately 280 ° C, a speed of 200 rpm, and an output of 15 kg/hr.

The mechanical properties of test pieces injection-moulded from the polymer mixtures according to Example I and according to comparative example A showed no noteworthy differences with the exception of one property: test pieces injection-moulded from the Example I polymer mixture showed a larger elongation at fracture (193%) than test pieces injection-moulded from the polymer mixture according to comparative Example A (174%).

The stability against transesterification was determined as follows. Test pieces for determining the Vicat-B value according to DIN 53460 were injection-moulded from the polymer mixtures according to Example I and according to comparative Example A. A series of test pieces were injection-moulded under normal conditions (255°C, residence time 2 minutes in the injection moulding machine) and a series under extra heavy conditions (285°C, 6 minutes). In a transesterification reaction products are formed which lead to a reduction of the Vicat value. A reduction of the Vicat value (Delta Vicat) thus indicates a transesterification: the larger the Delta Vicat, the larger the extent to which transesterification has occurred.

As compared with the prior art polymer mixtures (comparative example A), the polymer mixtures according to the invention have the additional advantage that surface defects (so-called "splay") (often occurring as a result of a transesterification reaction) occur to a much lesser extent also when injection-moulding under extreme conditions (285 °C, 6 minutes).

**TABLE I**

| Example No. | I | A |
|---|---|---|
| Composition (parts by weight) | | |
| PBT | 56 | 56 |
| PC | 20 | 20 |
| IM | 20 | 20 |
| TS | 0.9 | 0.9 |
| H₃PO₃ | 0.027 | 0.027 |
| PETS | 0.3 | - |

| Properties | | |
|---|---|---|
| Elongation at fracture (%) | 193 | 174 |
| Delta Vicat B (°C) | 17 | 25 |

It may be seen from the above results (Delta Vicat) that the addition of the tetrastearate of pentaerythritol leads to a further stabilisation against transesterification.

## Claims

1. Use of 0.1-5% by weight of one or more esters of one or more trifunctional to hexafunctional alcohols and one or more saturated aliphatic C₅-C₃₄ mono- or dicarboxylic acids (C) to suppress transesterification in a polymer mixture which comprises the following constituents:
A. 1-98.9% by weight of an aromatic polycarbonate,
B. 98.9-1 % by weight of an aromatic polyester, consisting of a polyalkylene terephthalate derived from a glycol with 2-10 carbon atoms and terephthalic acid, in which not more than 30 mol% of the glycol and/or terephthalic acid is replaced by other comonomers
D. 0-25% by weight of one or more agents to improve the impact strength, and
E. 0-50% by weight of conventional additives, in which the sum of the constituents A, B, C, D and E is 100% by weight,
with the exception of polymer mixtures comprising glass fibres, and not comprising a low molecular weight compound with up to 70 C-atoms and with (-SO₃)-ₘQ groups, in which Q represents hydrogen, NH4 +, an alkali or earth alkaline metal and m is a whole number which is equal to the value of the valence of Q, and not comprising a polymeric substance with sulphonic acid groups.

2. Use of 0.1-2% by weight of constituent C to suppress transesterification in a polymer mixture of claim 1.

3. Use of tetrastearate of pentaerythritol as constituent C to suppress transesterification in claim 1 or 2.

## Patentansprüche

1. Verwendung von 0,1 bis 5 Gewichtsprozent eines oder mehrerer Ester einer oder mehrerer trifunktioneller bis hexafunktioneller Alkohole und einer oder mehrerer gesättigter aliphatischer C₅-C₃₄ Mono- oder Dicarbonsäuren (C) zur Unterdrückung der Umesterung in einer Polymermischung, welche die folgenden Bestandteile umfasst:
A. 1 - 98,9 Gew.-% eines aromatischen Polycarbonats,
B. 98,9 - 1 Gew.% eines aromatischen Polyesters, bestehend aus einem Polyalkylenterephthalat abgeleitet von einem Glykol mit 2 - 10 Kohlenstoffatomen und Terephthalsäure, in welchem nicht mehr als 30 Mol-% der Glykol und/oder Terephthalsäure durch andere Comonomere ersetzt sind
D. 0 - 25 Gew.-% eines oder mehrerer Mittel zur Verbesserung der Schlagzähigkeit, und
E. 0 - 50 Gew.-% konventioneller Additive, wobei die Summe der Bestandteile A, B, C, D und E 100 Gew.-% ist,
ausgenommen Polymermischungen umfassend Glasfasern, und nicht umfassend eine Verbindung mit niedrigem Molekulargewicht mit bis zu 70 C-Atomen und mit (-SO₃)-ₘQ - Gruppen, worin Q Wasserstoff, NH4 +, ein Alkali oder Erdalkalimetall repräsentiert und m eine ganze Zahl ist, die gleich dem Wert der Valenzen von Q ist, und nicht umfassend eine polymere Substanz mit Sulfonsäuregruppen.

2. Verwendung von 0,1- 2 Gew.-% des Bestandteiles C zur Unterdrückung der Umesterung in einer Polymermischung nach Anspruch 1.

3. Verwendung von Tetrastearat des Pentaerythritols als Bestandteil C zur Unterdrückung der Umesterung nach Anspruch 1 oder 2.

## Revendications

1. Emploi de 0,1 à 5 % en poids de (C) un ou plusieurs esters d'un ou de plusieurs alcools trifonctionnels à hexafonctionnels et d'un ou de plusieurs acides monocarboxyliques ou dicarboxyliques aliphatiques saturés en C₅-C₃₄ pour supprimer la transestérification dans un mélange de polymères qui comprend les constituants suivants :
A) de 1 à 98,9 % en poids d'un polycarbonate aromatique,
B) de 98,9 à 1 % en poids d'un polyester aromatique constitué d'un poly(téréphtalate d'alkylène) dérivé de l'acide téréphtalique et d'un glycol comportant de 2 à 10 atomes de carbone, et dans lequel au plus 30 % en moles du glycol et/ou de l'acide téréphtalique sont remplacés par d'autres comonomères,
D) de 0 à 25 % en poids d'un ou de plusieurs agents améliorant la résistance au choc,
E) et de 0 à 50 % en poids d'adjuvants classiques,
le total des constituants A, B, C, D et E représentant 100 % en poids, à l'exception des mélanges de polymères contenant des fibres de verre, lequel mélange ne comprend pas de composé à faible masse moléculaire, comportant jusqu'à 70 atomes de carbone et des groupes (-SO₃)ₘ-Q où Q représente un atome d'hydrogène, un ion NH₄⁺ ou un atome de métal alcalin ou alcalino-terreux et m représente un nombre entier égal à la valence de Q, et ne comprend pas de substance polymère comportant des groupes sulfo.

2. Emploi de 0,1 à 2 % en poids de constituant (C) pour supprimer la transestérification dans un mélange de polymères défini dans la revendication 1.

3. Emploi de tétrastéarate de pentaérythritol en tant que constituant (C) pour supprimer la transestérification conformément à la revendication 1 ou 2.
